# EUROPÄISCHE PATENTSCHRIFT

(11) **EP 0 486 826 B1**
(45) Veröffentlichungstag und Bekanntmachung des Hinweises auf die Patenterteilung: **16.02.1994**
(21) Anmeldenummer: 91117946.3
(22) Anmeldetag: 22.10.1991
(51) Int. Cl.: B60G 17/015, G01P 3/52

(54) **Verfahren zum Messen der Relativgeschwindigkeit und der Endlagen bei einem Schwingungsdämpfer für Kraftfahrzeuge**
Method of measuring the relative velocity and the end positions of a shock absorber for a vehicle
Procédé de mesure de la vitesse relative et les positions fin de course d'un amortisseur de chocs

(30) Priorität: 17.11.1990 DE 4036703
(43) Veröffentlichungstag der Anmeldung: 27.05.1992
(73) Patentinhaber: AUGUST BILSTEIN GMBH & CO. KG, 58240 Ennepetal (DE)
(72) Erfinder: Gesenhues, Ludger, Dipl.-Ing., W-5810 Witten 7 (DE)

(56) Entgegenhaltungen:
- EP-A- 0 388 671
- CH-A- 575 115
- DE-A- 3 303 994
- GB-A- 2 098 007
- PATENT ABSTRACTS OF JAPAN vol. 7, no. 287 (M-264)(1432) 21. Dezember 1983

## Beschreibung

Die Erfindung bezieht sich auf ein Verfahren zum Messen der Relativgeschwindigkeit und zur Kontrolle der Endstellung des Ein- und Ausfahrhubes zwischen einem Dämpferzylinder und einem mit einer Kolbenstange verbundenen, sich in diesem bewegenden Dämpferkolben eines Schwingungsdämpfers für Kraftfahrzeuge.

Derartige Schwingungsdämpfer werden als Bindeglieder zur Übertragung der Schwingungen von der Fahrbahnoberfläche über das Rad-Federsystem auf die Karosserie eingesetzt, wobei insbesondere hydraulische, steuer- bzw. regelbare Schwingungsdämpfer zum Einsatz kommen, die einen hohen Fahrkomfort als auch eine größere Fahrsicherheit gewährleisten.

Mit der DE-OS 39 09 190 ist ein Schwingungsdämpfersensor für ein semiaktiv geregeltes Fahrwerk eines Kraftfahrzeuges und ein Verfahren gemäß dem Oberbegriff des Anspruchs 1 zur Messung der Relativgeschwindigkeit zwischen Aufbau und Achse bekannt geworden. Der Sensor besteht aus einer langgestreckten Sensorwicklung, die direkt oder indirekt mit der Kolbenstange verbunden, und einem Dauermagnet, welcher am Dämpfungszylinder angeordnet ist.

Der Sensor liefert über eine induzierte Spannung in der Sensorwicklung nur ein Signal für die Relativgeschwindigkeit, eine Messung und damit eine Einstellung des Ein- und Ausfahrhubes des Dämpferkolbens ist mit diesem Sensor jedoch nicht vorgesehen.

Der Erfindung liegt die Aufgabe zugrunde, einen Schwingungsdämpfer zu schaffen, bei dem ohne Verwendung von komplizierten und aufwendigen Sensoren neben der Relativgeschwindigkeit zwischen Aufbau und Achse auch die Endposition des Ein- und Ausfahrhubes gemessen und eingestellt werden kann, wodurch neben der gesteigerten Fahrsicherheit und dem Fahrkomfort ein Durchschlagen des Schwingungsdämpfers verhindert und damit die Lebensdauer des Schwingungsdämpfers erhöht wird.

Die Aufgabe der Erfindung wird durch ein Verfahren zum Messen der Relativgeschwindigkeit und zur Kontrolle der Endstellung des Ein- und Ausfahrhubes zwischen einem Dämpfungszylinder und einem mit einer Kolbenstange verbundenen, sich in diesem bewegenden Dämpferkolben eines Schwingungsdämpfers für Kraftfahrzeuge nach den Merkmalen der Patentansprüche gelöst, wobei die aus dem Stand der Technik bekannte Vorrichtung zur Durchführung des Verfahrens angewendet wird.

Es hat sich gezeigt, daß die induzierte Spannung im Mittelteil der Sensorwicklung proportional zur Relativgeschwindigkeit ist. Am Ende der Sensorwicklung jedoch erhöht sich bekannterweise die induzierte Spannung. Diese Tatsache wurde aber bislang nicht als Meßsignal genutzt, sondern vom Fachmann bewußt nicht in die Meßlänge einbezogen. Gemäß der Erfindung wird diese erhöhte induzierte Spannung als Signal für die Endstellungen des Schwingungsdämpfers genutzt, indem, wie in einer Ausgestaltung der Erfindung beschrieben, dieses Meßsignal mit einem Spannungsgrenzwert, der über dem induzierten Spannungswert im Mittelbereich der Spule liegt, verglichen wird.

Weiterhin kann zu einer noch genaueren Auswertung der Endstellungen des Ein- und Ausfahrhubes die Induktivität der Sensorwicklung erhöht werden.

Die Erfindung soll anhand der nachfolgenden Zeichnungen näher erläutert werden, wobei
- Fig. 1: einen Schwingungsdämpfer mit einer in der Abdeckung enthaltenen Sensorwicklung und einem mit dem Dämpferzylinder verbundenen Dauermagnet und
- Fig. 2: den Verlauf der induzierten Spannung bei konstanter Relativgeschwindigkeit längs der Sensorwicklung zeigt.

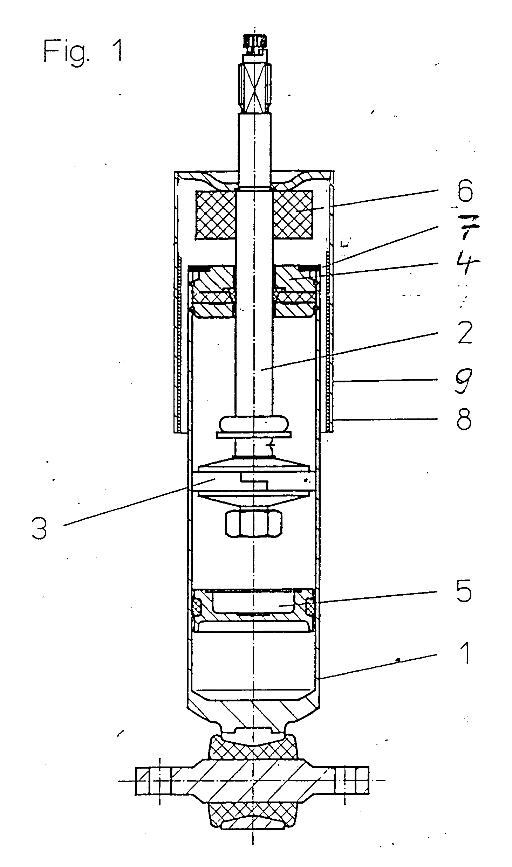

Der in Figur 1 dargestellte hydraulische, regelbare Schwingungsdämpfer besteht im wesentlichen aus einem Dämpferzylinder 1, der durch einen Führungsverschluß 4 verschlossen ist und einer mit einer Kolbenstangen 2 verbundenen, aus nicht magnetisierbaren Material bestehenden Abdeckung 9. Im Dämpferzylinder 1 befinden sich zwei Arbeitsräume, die durch den Trennkolben 5 getrennt werden. Unterhalb des Trennkolbens 5 befindet sich ein gasgefüllter Ausgleichsraum, welcher zur Kompensation der Volumenzu- bzw. -abnahme im hydraulischen Arbeitsraum durch das ein- bzw. ausfahrende Eigenvolumen der Kolbenstange 2 dient. Oberhalb des Trennkolbens 5 befindet sich der Dämpferkolben 3, festverbunden mit der beweglichen Kolbenstange 2, die durch den Führungsverschluß 4 hindurchgleitet und von einer Dichtung abgedichtet wird. Die aus nicht magnetisierbaren Material bestehende Abdeckung 9 ist derart ausgebildet, daß sie einseitig offen und über den Dämpferzylinder 1 gestülpt ist. In der Abdeckung 9 befindet sich eingebettet eine Sensorwicklung 8. Der durch die Sensorwicklung 8 hindurchgleitende Dauermagnet 7 ist auf dem Führungsverschluß 4 angeordnet. Zwischen dem Dauermagnet 7 und der Sensorwicklung 8 befindet sich ein Luftspalt.

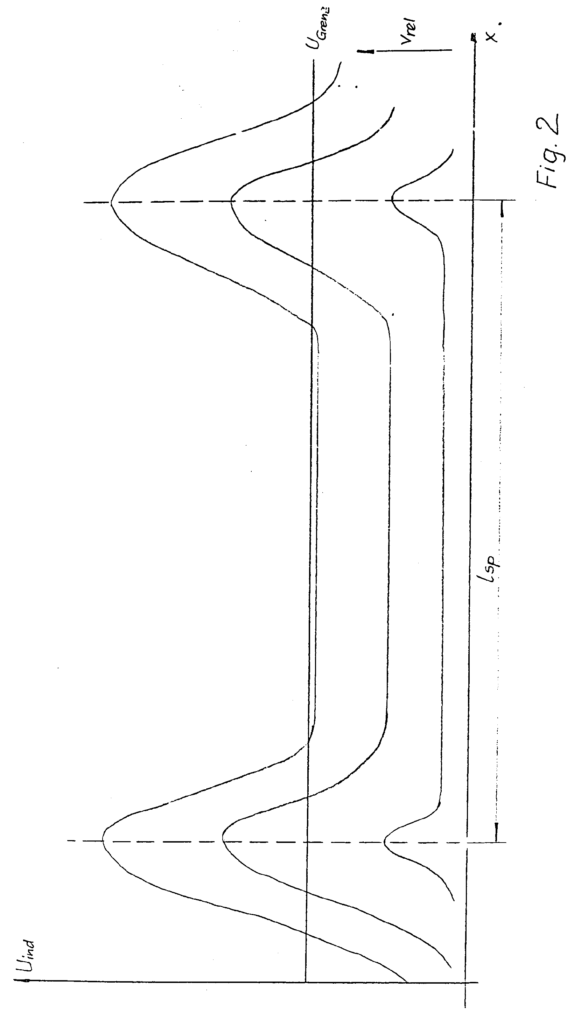

Wird nun aufgrund einer Fahrbahnunebenheit der Dämpferzylinder 1 nach oben gedrückt, bewegt sich der Dauermagnet 7 innerhalb der ihn umgebenden Sensorwicklung 8 nach oben und induziert in der Sensorwicklung eine Spannung U_{ind}, deren Verlauf in Abhängigkeit der Spulenlänge lₛₚ in Fig. 2 dargestellt ist. Dieses Spannungssignal ist innerhalb des Mittelteils der Wicklung proportional zur Relativgeschwindigkeit Vᵣₑₗ, an den Enden der Sensorwicklung 8 erhöht sich jedoch die induzierte Spannung U_{ind} erheblich und kann somit zur Kontrolle der Endstellungen des Einfahr- und Ausfahrhubes verwendet werden. Die Sensorwicklung 8 wird dazu nicht mehr über die gesamte Länge der Abdeckung 9 gewickelt, sondern derart, daß ihre Enden mit den Endstellungen des Ein- und Ausfahrhubes korrespondieren.

Die induzierte Spannung U_{ind} wird zur Auswertung mit einem Spannungsgrenzwert U_{Grenz}, welcher der maximal zulässigen Relativgeschwindigkeit Vᵣₑₗ entspricht verglichen, wird dieser Spannungsgrenzwert überschritten ist entweder, die maximal zulässige Relativgeschwindigkeit zwischen Dämpferzylinder 1 und Dämpferkolben 3 überschritten oder eine Endstellung des Ein- oder Ausfahrhubes erreicht. Die Dämpfung wird auf eine "harte Kennung" geschaltet und der Dämpferzylinder 1 läuft mit einer ungefährlichen Geschwindigkeit auf den Puffer 6 auf. Wie aus Fig. 2 ersichtlich werden die Endstellungen des Ein- und Ausfahrhubes bei einer geringen Relativgeschwindigkeit nicht sensiert, da hier die Gefahr des Durchschlages des Schwingungsdämpfers nicht besteht.

### Bezugszeichenliste

- 1: Dämpferzylinder
- 2: Kolbenstange
- 3: Dämpferkolben
- 4: Führungsverschluß
- 5: Trennkolben
- 6: Puffer
- 7: Dauermagnet
- 8: Sensorwicklung
- 9: Abdeckung
- lₛₚ: Spulenlänge
- U_{ind}: induzierte Spannung
- Vᵣₑₗ: Relativgeschwindigkeit
- U_{Grenz}: Spannungsgrenzwert

## Patentansprüche

1. Verfahren zum Messen der Relativgeschwindigkeit und zur Kontrolle der Endstellung des Ein- und Ausfahrhubes zwischen einem Dämpfungszylinder (1) und einem mit einer Kolbenstange (2) verbundenen, sich in diesem bewegenden Dämpfungskolben (3) eines Schwingungsdämpfers für Kraftfahrzeuge, wobei die Kolbenstange (2) bzw. der Dämpfungszylinder (1) mit einer zylindrisch ausgebildeten Sensorspule (8) und einem in Spulenlängsrichtung gegenüber dieser beweglichen Dauermagnet (7) versehen ist und eine die in der Sensorspule induzierte Spannung zur Regelung auswertende elektrische Schaltung vorhanden ist, dadurch gekennzeichnet, daß der Dauermagnet (7) das jeweilige Spulenende jeweils kurz vor der Endstellung des Dämpfungskolbens (3) passiert und die erhöhte induzierte Spannung beim Passieren des Spulenendes als Meßsignal für die Endstellungen des Schwingungsdämpfers genutzt wird.

2. Verfahren zum Messen der Relativgeschwindigkeit nach Anspruch 1, dadurch gekennzeichnet, daß die Auswerteschaltung hinsichtlich der Kontrolle der Endstellungen über einen Spannungsgrenzwert angesteuert wird, der über dem induzierten Spannungswert im Mittelbereich der Spule (8), der der maximal zulässigen Relativgeschwindigkeit entspricht, liegt.

3. Verfahren zum Messen der Relativgeschwindigkeit nach Anspruch 1 oder Anspruch 2, dadurch gekennzeichnet, daß die Induktivität der Spule (8) an ihrem Endbereich erhöht ist.

## Claims

1. Process for measuring the relative velocity and for controlling the end positions of the inward and outward stroke between a damper cylinder (1) and a damper piston (3) which is connected to a piston rod (2) and moves inside the damper cylinder (1), the damper piston being part of a shock absorber for a motor vehicle and the piston rod (2) or the damper cylinder (1) having a cylindrically designed sensor coil (8) and a permanent magnet movable in a longitudinal direction of the coil with regard to the sensor coil and an evaluating electrical circuit for monitoring the voltage induced in the sensor coil, characterised in that the permanent magnet (7) passes the respective coil end in each case shortly in advance of the end position of the damper piston (3) and the increased induced voltage when passing the coil end is used as a measuring signal for the end positions of the shock absorber.

2. Process for measuring the relative velocity as claimed in claim 1 characterised in that the evaluating electrical circuit monitoring the end positions is triggered by way of a voltage limit value, which lies above the induced voltage level in the middle region of the coil (8) , which corresponds to the maximum permissible relative value.

3. Process for measuring the relative velocity as claimed in claims 1 and 2 characterised in that the inductance of the coil (8) is increased at its end region.

## Revendications

1. Procédé de mesure de la vitesse relative et de contrôle de la position de fin de course, des courses de rétraction et d'extension, entre un cylindre d'amortissement (1) et un piston d'amortissement (3) relié à une tige de piston (2) et se déplaçant dans celui-ci, d'un amortisseur pour véhicules automobile, dans lequel la tige de piston (2) ou le cylindre d'amortissement (1) sont respectivement dotés d'une bobine de détection (8) de forme cylindrique et d'un aimant permanent (7) se déplaçant par rapport à cette bobine, dans le sens longitudinal de celle-ci, et d'un circuit électrique évaluant la tension induite dans la bobine de détection, en vue d'une régulation, caractérisé en ce que l'aimant permanent (7) passe devant chaque extrémité de la bobine peu avant que le piston d'amortissement (3) atteigne sa position de fin de course, et que la tension induite renforcée, au passage de l'extrémité de la bobine, est utilisée comme signal de mesure des positions de fin de course de l'amortisseur.

2. Procédé de mesure de la vitesse relative selon la revendication 1, caractérisé en ce que, en vue du contrôle des positions de fin de course, le circuit d'évaluation est excité au-delà d'une valeur limite de la tension qui se situe au-dessus de la valeur de la tension induite dans la partie centrale de la bobine (8), qui correspond à la vitesse relative maximale admissible.

3. Procédé de mesure de la vitesse relative selon la revendication 1 ou la revendication 2, caractérisé en ce que l'inductance de la bobine (8) est renforcée au voisinage de ses extrémités.
